Europäisches Patentamt

European Patent Office

Office européen des brevets

(19)

(11) EP 0 701 686 B1

(12) **EUROPÄISCHE PATENTSCHRIFT**

(45) Veröffentlichungstag und Bekanntmachung des Hinweises auf die Patenterteilung:
**18.11.1998  Patentblatt 1998/47**

(21) Anmeldenummer: **94906879.5**

(22) Anmeldetag: **16.02.1994**

(51) Int Cl.⁶: $G01J\ 5/00$, $G01B\ 11/06$

(86) Internationale Anmeldenummer:
**PCT/DE94/00168**

(87) Internationale Veröffentlichungsnummer:
**WO 94/29681 (22.12.1994 Gazette 1994/28)**

(54) **GLEICHZEITIGES BESTIMMEN VON SCHICHTDICKE UND SUBSTRATTEMPERATUR WÄHREND DES BESCHICHTENS**

SIMULTANEOUS DETERMINATION OF LAYER THICKNESS AND SUBSTRATE TEMPERATURE DURING COATING

DETERMINATION SIMULTANEE DE L'EPAISSEUR DES COUCHES ET DE LA TEMPERATURE DU SUBSTRAT PENDANT UNE OPERATION D'ENDUCTION

(84) Benannte Vertragsstaaten:
**AT BE CH DE ES FR GB IE IT LI NL SE**

(30) Priorität: **03.06.1993  DE 4318520**
**11.01.1994  WOPCT/DE94/00020**

(43) Veröffentlichungstag der Anmeldung:
**20.03.1996  Patentblatt 1996/12**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
- **BÖBEL, Friedrich**
  **D-91080 Uttenreuth (DE)**
- **BAUER, Norbert**
  **D-91058 Erlangen (DE)**

(74) Vertreter:
**Leonhard, Frank Reimund, Dipl.-Ing. et al**
**Leonhard - Olgemöller - Fricke**
**Patentanwälte**
**Josephspitalstrasse 7**
**80331 München (DE)**

(56) Entgegenhaltungen:
**EP-A- 0 408 015         WO-A-92/19944**
**US-A- 5 029 117         US-A- 5 156 461**
**US-A- 5 180 226**

- **SOLID-STATE ELECTRONICS, Bd.18, Nr.1, 1975 Seiten 110 - 111 'DIELECTRIC FILM THICKNESS MEASUREMENT FROM THE REFLECTION RELATIONS'**
- **MEASUREMENT, Bd.11, Nr.1, März 1993, LONDON GB Seiten 55 - 64 Z-H CHEN ET AL. 'EMISSIVITY CORRECTION IN INFRARED MICROTHERMOGRAPHY'**

Bemerkungen:
Die Akte enthält technische Angaben, die nach dem Eingang der Anmeldung eingereicht wurden und die nicht in dieser Patentschrift enthalten sind.

**Beschreibung**

Das technische Gebiet der Erfindung ist die Temperatur- und Schicht-Dickenmessung während des Beschichtungsprozesses von Substraten mit bekannten Beschichtungs-Technologien in Halbleiter-Fertigungsanlagen, Plasma-, Ionen- und anderen Trocken-Ätzanlagen sowie bei der Herstellung optischer Schichten.

Messungen der Substrattemperatur gehören zu den bedeutendsten Hilfsmitteln bei der Prozeßkontrolle von Beschichtungs-Vorgängen. Die Substrattemperatur bestimmt das Kristallisations-Verhalten, kennzeichnet die Aufwachs-Geschwindigkeit, Diffusions-Geschwindigkeit, etc. und beeinflußt thermodynamische, chemische und physikalische Prozesse gleichermaßen. In der Halbleiter- und der elektronischen Bauteilefertigung, bei der optischen Vergütung, der Herstellung von Hochleistungs-Optiken, IOC (integrad optical circuits), Halbleiter-Laserdioden etc. sind Temperaturmessungen deshalb von herausragender Bedeutung.

Das trifft auf alle Prozesse zu, bei denen Beschichtungstechnologien, wie z. B. CVD (chemical vapor deposition), MBE (molecular beam epitaxy), thermische Oxidation, Kathodenzerstäubung ("Sputtering") oder Plasmapolymerisation eingesetzt werden.

Aufgrund solcher Prozeßbedingungen, wie hohe Temperaturen, Ultrahochvakuum (UHV), chemisch reaktive Umgebung, rotierende Substrate ist eine direkte Messung der Substrattemperatur über geeichte Platinfilm-Widerstände (meist: Thermoelemente) oder andere Kontaktthermometer meistens nicht möglich, so daß die Substrattemperatur über pyrometrische Messungen bestimmt wird. Da die detektierte Temperaturstrahlung an der aufwachsenden Schicht interferiert, ist die gemessene Strahlungsintensität sowohl von der Temperatur T als auch von der Schichtdicke d (Filmdicke) abhängig.

Beobachtet man das Pyrometersignal während des Beschichtungsprozesses, so oszilliert es aufgrund der sich ändernden Schichtdicke, selbst wenn die Temperatur konstant bleibt.

Als Folge der Interferenzerscheinungen ändert sich die Emissivität $\varepsilon$ während der Beschichtung ständig, so daß eine pyrometrische Temperaturmessung nicht angewandt werden kann. Besonders problematisch ist die pyrometrische Temperaturmessung an Vielschichtsystemen, deren aktuelle Emissivität von den Dicken aller Schichten, deren optischen Konstanten, den Temperaturabhängigkeiten der optischen Konstanten, dem Beobachtungswinkel und der Beobachtungswellenlänge abhängt.

In situ Meßsysteme zur Temperaturbestimmung in Echtzeit während der Beschichtung sind erst seit kurzem bekannt. Das in E.S.Hellmann und J.S.Harris, J.Crys.Grow., 81, 38-42 (1988) beschriebene Verfahren beruht auf der Temperaturabhängigkeit der Bandlücke von Halbleiter-Wafern und kann nur in Prozessen angewandt werden, deren Prozeßkammergeometrie eine Transmissionsmessung zuläßt und wo die Bandkante des Substrats im spektroskopisch zugängigen Bereich liegt. So kann beispielsweise an Quarz- oder Metallsubstraten die Temperatur nicht gemessen werden.

Dieses Verfahren blieb deshalb in seiner praktischen Anwendbarkeit auf MBE (Molecular Beam Epitaxy) Anlagen beschränkt, die für Indium-Free-Mounting ausgelegt waren, d. h. das Substrat ist nicht - wie üblich - auf einem Molybdänblock aufgeklebt, sondern direkt vor die Heizelemente montiert ("mounted").

Das Dokument WO-A-92/19944 beschreibt ein Verfahren zur gleichzeitigen Bestimmung von Temperatur und Schichtdicke wobei eine Ripple-Technik verwendet wird. Das Dokument US-A-5 029 117 beschreibt ein Verfahren zur Temperatur bestimmung bei dem ein Reflektometer zur Bestimmung der Emissivität eingesetzt wird.

Weitere in situ Temperatur-Meßverfahren verwenden den Funktions-Zusammenhang zwischen Temperatur und Brechungsindex aus (z. B. ellipsometrische Temperaturmessung), die allerdings eine genaue Kenntnis der Temperatur-Abhängigkeit der Materialkonstanten voraussetzen. Da für die meisten Materialien dieser Funktions-Zusammenhang nicht bekannt ist, sind diese Verfahren bis jetzt noch kaum in der Anwendung zu finden.

Im jetzigen Stand der Technik ist deshalb eine in situ Temperaturmessung des Substrates während der Beschichtung in den meisten Fällen nicht möglich oder nicht praktikabel.

Ausgehend vom beschriebenen Stand der Technik ist es Aufgabe der Erfindung, ein Verfahren und eine geeignete Vorrichtung zur Realisierung des Verfahrens vorzuschlagen, womit die gleichzeitige Bestimmung von Schichtdicke und Substrattemperatur in Beschichtungsprozessen ermöglicht wird. Beide Größen sollen dabei in situ direkt auf der Waferoberfläche gemessen werden, das Verfahren soll echtzeitfähig sein und sich insbesondere als Meßsystem zur Prozeßkontrolle eignen.

Die tragenden Merkmale einer erfindungsgemäßen Lösung dieser Aufgabe sind im Patentanspruch 1 zusammengefaßt. Zur Durchführung dieser Verfahrenslehre wird die technische Lehre gemäß Anspruch 8 vorgeschlagen. Weiterbildungen der Erfindung sind in den jeweiligen abhängigen Ansprüchen näher umschrieben.

Gemäß der Erfindung kann neben einem pyrometrischen Detektor zur Messung der Temperaturstrahlung ein Laser oder eine monochromatisierte andere Lichtquelle, beispielsweise eine Halogenlampe mit vorgeschaltetem Interferenzfilter, zusammen mit einem zugehörigen Detektor eingesetzt werden, wobei der Detektor für die reflektierte Strahlung zur Vermessung der von der jeweiligen Schichtdicke abhängigen Emissivität des beschichteten Substrats dient.

Die Transmissionswellenlänge der Filter und die Wellenlänge des Lasers bzw. der monochromatisierten Lichtquelle sowie der Beobachtungswinkel für Temperaturstrahlung und reflektierte Strahlung sollten gleich sein.

Die Erfindung der in situ Temperaturbestimmung geht von den nachfolgend dargestellten physikalischen Zusammenhängen aus.

Die vom Substrat emittierte Temperaturstrahlung wird an der aufwachsenden Schicht mehrfach reflektiert und gebrochen. Die so entstehenden Teilstrahlen interferieren miteinander, so daß das über Filter und Linsensystem empfangene Detektorsignal bei konstanter Temperatur T in Abhängigkeit von der Schichtdicke d oszilliert (R=f (d)).

Man kann diesen Sachverhalt durch Einführung eines von der Schichtdicke abhängigen Emissionskoeffizienten $\varepsilon$ ($\lambda$,T,d) (Emissivität) beschreiben. Das Signal am Pyrometer P ist dann proportional zu

$$P \sim \varepsilon \cdot f_{plank} = \varepsilon \frac{c_1}{\lambda^5} \frac{1}{e^{\frac{c_2}{\lambda T}} - 1}$$

mit $c_1 = 3.741 \cdot 10^4$ W cm$^{-2}$ $\mu$m$^4$ und $c_2 = 1.438 \cdot 10^4$ $\mu$m K. $f_{Planck}$ steht für die Plancksche Strahlungsformel und $\lambda$ für die Wellenlänge. Für das auf den Anfangswert $P_o$ normierte Signal ergibt sich

$$\frac{P}{P_o} = \frac{\varepsilon \cdot f_{planck}(\lambda,T)}{\varepsilon \cdot f_{planck}(\lambda,T_o)}$$

wobei $T_o$ die Temperatur beim Beginn der Beschichtung ist. Nach dem Kirchhoffschen Gesetz ist die Emission gleich der Absorption: $\varepsilon$=A. Da aufgrund des Energieerhaltungssatzes aber Reflektivität R + Absorption A + Transmission TR = 1 gelten muß, ergibt sich für den Fall eines undurchsichtigen Substrats (Transmission TR=0) $\varepsilon$=1-R.

Die Reflektivität R wird durch einen Reflektometerast im mit der Erfindung vorgeschlagenen Meßaufbau gemessen, für dessen auf den Anfangswert $L_o$ normierte Intensität L sich $L/L_o = R/R_o$ ergibt. Für $\varepsilon$ erhält man also

$$\varepsilon = 1-R = 1 - R_o \cdot L/L_o$$

wobei $R_o$ als Reflexion des unbeschichteten Substrates durch Messung, Eichung oder aus der Literatur ermittelt werden kann. Nimmt man die auf den Anfangswert normierten Detektorsignale $P/P_o$ und $L/L_o$ zu Hilfe, läßt sich

$$\frac{P}{P_o} = \frac{(1 - R_o \cdot L/L_o)}{(1 - R_o)} \cdot \frac{\frac{c_1}{\lambda^5} \cdot \frac{1}{e^{c_2/\lambda T} - 1}}{f_{planck}(\lambda,T_o)}$$

schreiben. Durch Umstellung erhält man daraus für die Temperatur die Gleichung (1), die nur von L und P abhängig ist.

$$T = \frac{c_2}{\lambda} \left( \ln \left[ 1 \div \frac{1}{\frac{\lambda^5}{c_1} f_{planck}(\lambda, T_0) \frac{P}{P_0} \frac{1-R_0}{1-R_0 \frac{L}{L_0}}} \right] \right)^{-1}$$

Es ergibt sich also eine eindeutige Auswertevorschrift, die eine Temperaturbestimmung ermöglicht, die nicht mehr von der aufwachsenden Schichtdicke sowie mangelnder Kenntnis der wahren Materialkonstanten verfälscht wird.

Die Anfangstemperatur $T_0$ läßt sich z. B. durch einfache Pyrometrie bestimmen.

Die thermische Strahlung des Substrats und die reflektierte Strahlung einer Lichtquelle werden durch jeweils einen Detektor gemessen, wobei mittels einer zu jedem Detektor gehörenden phasenempfindlichen Modulationstechnik sichergestellt wird, daß in einem Detektorast A nur die vom Substrat reflektierte Strahlung der Lichtquelle proportional zur Reflektivität R und im zweiten Detektorast B nur die thermische Strahlung proportional zu $\varepsilon \cdot f_{Planck}$ gemessen wird.

Die "Äste" sind im Zuge des Strahlengangs zu sehen, wobei der Ast A Lichtquelle - Substrat - Reflektometer - erster Detektor und der Ast B Substrat - zweiter Detektor im Strahlengang hat.

Die phasenempfindliche Modulationstechnik besteht aus jeweils einem Chopper, der mit einem Lock-in Verstärker in Verbindung steht, wobei zwischen dem Chopper A der Lichtquelle und dem Chopper B vor dem Detektor für die thermische Strahlung eine Phasendifferenz von $\pi$ besteht und die Spaltbreite von Chopper A etwa 3 bis 7 mal kleiner ist als bei Chopper B. Dadurch gelangt weder reflektierte noch Streustrahlung von der Lichtquelle an den thermischen Detektor.

Gemäß Anspruch 3 wird mit einem ersten Chopper Licht in einem schmalen ersten Frequenzband bereitgestellt, mit einem zweiten Chopper wird die thermische Strahlung in ein zweites Frequenzband moduliert.

Am Detektor im Reflektometerast A für die reflektierte Strahlung liegen also Frequenzkomponenten um f1 (von der reflektierten Strahlung) sowie sehr tieffrequente (praktisch DC) Komponenten (von der thermischen Strahlung) an. Der zugehörige Lock-in Verstärker registriert nur solche Signale, die in einem schmalen Band um f1 liegen. Die tieffrequenten thermischen Komponenten werden also herausgefiltert. Am Ausgang dieses Lock-in Verstärkers liegt damit ein Signal proportional zur Reflektivität R an.

Analog verhält es sich mit dem Detektorast B für die Substratstrahlung, wobei die thermische Strahlung vom zugehörigen Chopper in einen Frequenzbereich um f2 moduliert wird, während die reflektierte Strahlung in den Frequenzbereichen f1+f2 und f1-f2 vorliegt. Der zweite Lock-in Verstärker unterdrückt alle Komponenten, die nicht in einem schmalen Frequenzband um f2 liegen. Falls f1 und f2 genügend weit auseinander liegend gewählt werden, ist die Ausgangsspannung an diesem Lock-in Verstärker proportional zu $\varepsilon \cdot f_{Planck}$.

An den Detektoren kann eine analoge oder eine digitale Signalverarbeitung angeschlossen sein, die aus den Signalen in Echtzeit mit der Auswertevorschrift nach Gleichung (1) die aktuelle Temperatur T bestimmt, während die Schichtdicke durch einen Vergleich der Reflektivitätskurve mit der theoretischen Schichtdicken-Abhängigkeit [R=f (d)] ermittelt wird.

Die auf diese Weise bestimmte Temperatur T kann zur Prozeßkontrolle bzw. -regelung eingesetzt werden.

Die erfindungsgemäße Meßvorrichtung (Anspruch 5) besteht aus einem Reflektometerast A und einem Substratstrahlungsast B zur Messung der Intensität der thermischen Substratstrahlung.

Im Substratstrahlungs-Ast B ist ein erster Detektor und im Reflektometer-Ast A ein zweiter Detektor zur Erfassung der von einer Lichtquelle ausgesendeten und vom Wafer reflektierten Strahlung vorgesehen.

Die Monochromatisierung der Strahlung der Lichtquelle des Reflektometerastes und der thermischen Strahlung des Substrates erfolgt dabei durch denselben oder durch baugleiche Filter.

Jedem Detektor ist ein Chopper sowie ein Lock-in Verstärker zugeordnet.

Die Meßvorrichtung kann so aufgebaut sein, daß der Einfallswinkel des Reflektometerlichtes und der Beobachtungswinkel des Pyrometerastes gleich sind.

Als Lichtquellen können monochromatische Quellen, wie beispielsweise Laser oder Weißlichtquellen in Form von Globarstäben (SiC), Schwarzkörperstrahlern, Halogenlampen u.a.m. eingesetzt werden.

Das erfindungsgemäße Verfahren zeichnet sich gegenüber konventionellen Meßmethoden durch eine Reihe überraschender Vorteile aus:

- Die Bestimmung der Emissivität E ist völlig unabhängig von irgendwelchen Vorkenntnissen über das Material, d. h. weder die optischen Konstanten noch die Dicken der aufgebrachten Schichten werden für eine Temperaturmessung benötigt.
- Für eine Temperaturmessung gibt es praktisch keine Einschränkungen bezüglich Material- und Schichtdickenkonfiguration; Halbleiter (Si, GaAs, InP, InSb, HgTe, CdTe sowie ternäre und quartanäre Systeme) und Isolatoren sind genauso geeignet wie Metallschichten; die Dicken der aufgebrachten Schichten dürfen zwischen einer Atomlage und mehreren hundert μm liegen.
- Die Auswertung erfolgt in Echtzeit. Somit kann das Verfahren auch zur Steuerung schnell veränderlicher Prozesse eingesetzt werden (z.B. in RTP-Anlagen [Rapid Thermal Processing]).
- Gleichzeitige Messung von Temperatur T und Schichtdicke d während des Prozesses.
- Die Temperaturmessung wird nicht durch die Interferenz-Oszillationen der Temperaturstrahlung an der aufwachsenden Schicht d(t) verfälscht.
- Hohes Auflösungsvermögen, sowohl bezüglich Temperatur als auch Schichtdicke.
- Sehr günstiges Kosten/Nutzen-Verhältnis, da nur wenige kommerziell erhältliche Komponenten benötigt werden.

Darüberhinaus gelten die üblichen Vorteile von optischen in situ Messungen:

- Kein zusätzlicher Handhabe-Mechanismus.
- Unempfindlich gegenüber feindlichen Umgebungen.
- Gute Einkopplungs-Möglichkeit in Vakuumprozesse.

Einsatzgebiete sind die Vermessung von Temperatur und Schichtdicke während des Prozesses und daraus ableitbare Anwendungen, wie z. B. die Prozeßsteuerung und -überwachung in der Beschichtungs-Technologie, experimentelle Überprüfung von Simulationsmodellen in der Grundlagenforschung und der Prozeßoptimierung.

Die Erfindung wird nachstehend anhand eines Ausführung**sbeispieles** beschrieben, auf das ausdrücklich verwiesen wird.

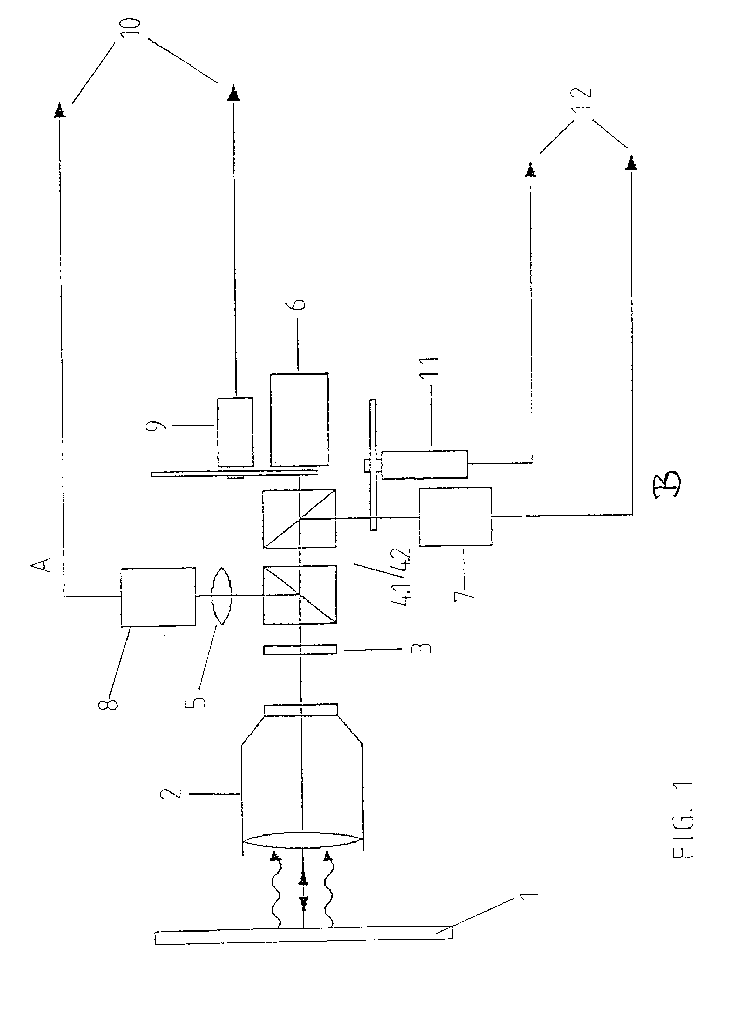

**Figur 1** zeigt die prinzipielle Darstellung eines Beispiels einer erfindungsgemäßen Meßvorrichtung.

Dieser - die erwähnte Gleichung (1) für die Bestimmung der Temperatur T umsetzende - Meßaufbau umfaßt in einer Ausführungsvariante die folgenden Komponenten:

Die Intensität der thermischen Strahlung des Substrats 1 wird von einem schmalbandigen Interferenzfilter 3 monochromatisiert und mittels eines ersten Detektors 7 für die Auswertung der Substratstrahlung, der bei der entsprechenden Wellenlänge empfindlich ist, gemessen. Zusätzlich wird die gerichtete Strahlung einer Lichtquelle 6 ebenfalls durch denselben oder - falls man zwei Interferenzfilter auf die beiden (optischen) Detektoräste A und B verteilt - einen transmissionsgleichen Filter monochromatisiert und auf das Substrat 1 eingestrahlt. Das reflektierte Licht wird von einem zweiten Detektor 8 gemessen.

Der Strahlengang im Meßsystem und damit die Anordnung der Bauelemente Objektiv 2, Filter 3, Strahlteiler 4.1 und 4.2, Linse 5 ist dabei so ausgeführt, daß sowohl die thermische Strahlung als auch die reflektierte Strahlung der Lichtquelle 6 auf beide Detektoren 7, 8 auftrifft. Um zu erreichen, daß im einen Detektorast B nur die thermische Strahlung proportional zu $\varepsilon \cdot f_{Planck}$ und im anderen Detektorast A nur die reflektierte Strahlung proportional zur Reflektivität R gemessen wird, greift man auf phasenempfindliche Modulationstechnik zurück. Jedem Detektor ist dazu jeweils ein optischer Modulator (Chopper) 9, 11 sowie jeweils ein Lock-in Verstärker 10, 12 zugeordnet.

Am Detektor 8 für die reflektierte Strahlung werden Frequenzkomponenten um f1 - verursacht durch die von der Lichtquelle 6 ausgesendete, vom Chopper 9 in den Frequenzbereich um f1 gemischte und vom Substrat 1 reflektierte Strahlung - sowie sehr niederfrequente Komponenten von der thermischen Strahlung des Substrats 1 empfangen. Vom zugehörigen Lock-in-Verstärker 10 werden nur die Signale registriert, die im Frequenzband um f1 liegen; damit liegt am Ausgang dieses Lockin-Verstärkers 10 ein Signal an, das proportional zur Reflektivität R ist.

Im optischen Ast B wird in analoger Weise die thermische Strahlung des Substrats 1 vom Detektor 7 empfangen, die mittels Chopper 11 in einen Frequenzbereich um f2 moduliert wurde. Die Ausgangsspannung am Lock-in Verstärker 12 ist hier proportional zu $\varepsilon \cdot f_{planck}$. Die weitere Auswertung erfolgt auf der Grundlage der Gleichung (1).

Der erläuterte Meßaufbau stellt nur eine von mehreren Möglichkeiten dar. Bei anderen Ausführungsformen muß beispielsweise die Einfallsrichtung der Strahlung nicht senkrecht sein. In diesem Falle werden die beiden Detektoräste A und B von der Lichtquelle räumlich getrennt sein.

**Patentansprüche**

1. Verfahren zum echtzeitfähigen, gleichzeitigen Bestimmen von Film-Schichtdicke (d) und Temperatur (T) unmittelbar auf

   - jedoch ohne Berührung - der Oberfläche eines einer Beschichtung unterworfenen Substrats (1), wie Wafer, bei dem zeitgleich die zeitlichen Meßsignale eines Pyrometers (B;7,11,12) und eines Reflektometers (A; 5,8,10) ausgewertet werden, wobei

     (a) die Schichtdicke (d) durch einen Vergleich der gemessenen Reflektivität (R) mit einer vorgegebenen Schichtdicken-Abhängigkeit (R=f(d)) bestimmt wird;
     (b) die Temperatur (T) durch eine nicht von dem Parameter Emissivität (ε) und nicht von dem Parameter Schichtdicke (d), aber von den Meßsignalen (P,L) des Reflektometers (A;5,8,10) und Pyrometers (B; 7,11,12) abhängige Auswertevorschrift in Echtzeit erfaßt wird.

2. Verfahren zur Bestimmung der Schichtdicke (d) und der Substrattemperatur (T) während der Beschichtung von Substraten (1) in Vorrichtungen zur Fertigung von Halbleitern oder in Beschichtungsanlagen unter Verwendung einer detektierten Temperaturstrahlung von dem beschichteten Substrat (1) nach Anspruch 1, **dadurch gekennzeichnet, daß**

   - die Emissivität (ε) von einem Reflektometer nach der Gleichung ε=1-R bestimmt wird;
   - die Temperatur (T) nach der Auswertevorschrift

$$T = \frac{c_2}{\lambda} \left( \ln \left[ 1 + \frac{1}{\frac{\lambda^5}{c_1} f_{planck}(\lambda, T_0) \frac{P}{P_0} \frac{1-R_0}{1-R_0 \frac{L}{L_0}}} \right] \right)^{-1}$$

bestimmt wird,
wobei die Anfangstemperatur ($T_o$) durch Pyrometrie ermittelt wird; und
die Bestimmung der Schichtdicke (d) durch einen Vergleich der gemessenen Reflektivität mit einer vorgegebenen - bei Vergrößern der Schichtdicke (d) - oszillierenden Schichtdicken-Abhängigkeit (R=f(d)) bestimmt wird.

3.  Verfahren nach Anspruch 1 oder 2, dadurch gekennzeichnet,

    -   daß die thermische Strahlung des Substrates (1) und die reflektierte Strahlung einer Lichtquelle (6) durch jeweils einen Detektor (7,8) gemessen wird, mittels einer zu jedem Detektor gehörenden phasenempfindlichen Modulationstechnik - enthaltend jeweils einen Chopper (9,11) sowie einen damit verbundenen Lock-in-Verstärker (10,12);
    -   daß in einem Detektorast (A) nur die vom Substrat (1) reflektierte Strahlung der Lichtquelle (6) proportional zur Reflektivität (R) und im anderen Detektor (B) nur die thermische Strahlung proportional zu $\varepsilon.f_{Planck}$ gemessen wird;
    -   daß die Signale der Detektoren (7,8) analog oder digital verarbeitet werden, um mit der Auswertevorschrift die Temperatur (T) in Echtzeit zu bestimmen.

4.  Verfahren nach einem der Ansprüche 1 oder 2, dadurch gekennzeichnet, daß das Licht einer Lichtquelle (6) mittels einem optischen Chopper (9) in einem schmalen ersten Frequenzbereich bereitgestellt wird und die thermische Strahlung von einem zweiten Chopper (11) in einen zweiten Frequenzbereich moduliert wird.

5.  Verfahren nach einem der erwähnten Ansprüche, dadurch gekennzeichnet, daß die nach der Auswertevorschrift bestimmte Temperatur (T) zur Prozeßregelung eingesetzt wird.

6.  Verfahren nach einem der erwähnten Ansprüche, bei dem die Reflektivität (R) zur Bestimmung der Emissivität ($\varepsilon$) herangezogen wird.

7.  Verfahren nach einem der erwähnten Ansprüche, bei dem das Substrat (1) undurchsichtig ist.

8.  **Vorrichtung** zur Durchführung des Verfahrens nach einem der vorstehenden Verfahrensansprüche, dadurch gekennzeichnet,

    -   daß zur Messung der Intensität der thermischen Substratstrahlung in einem Temperaturstrahlungs-Ast (B) ein erster Detektor (7) vorhanden ist;
    -   daß im Reflektometerast (A) ein zweiter Detektor (8) zur Erfassung der von einer Lichtquelle (6) ausgesendeten und vom Substrat (1) reflektierten Strahlung vorgesehen ist;
    -   wobei die Lichtquelle (6) des Reflektometer-Astes (A) und die thermische Strahlung des Substrates (1) durch denselben oder baugleiche Filter (3) monochromatisiert sind;
    -   wobei den Detektoren (7,8) jeweils ein Chopper (9,11) sowie ein Lock-in Verstärker (10,12) zugeordnet sind.

9.  Vorrichtung nach Anspruch 8, dadurch gekennzeichnet, daß der Einfallswinkel des Reflektometerlichtes und der Beobachtungswinkel des Temperaturstrahlungs-Astes mit Pyrometer gleich sind.

10. Vorrichtung nach einem der varigen Vorrichtungsansprüche, dadurch gekennzeichnet, daß die Lichtquelle (6) eine monochromatische Lichtquelle - vorzugsweise Laser, Weißlichtquelle in Form von Globarstäben (SIC), Schwarzkörperstrahler oder Halogenlampe - ist.

11. Vorrichtung nach einem der varigen Vorrichtungsansprüche, dadurch gekennzeichnet, daß bei nicht senkrechtem Einfall der Strahlung auf das Substrat (1) die beiden Detektoräste (A;B) von der Lichtquelle (6) räumlich getrennt ausgeführt sind.

## Claims

1. A process for real time capable, simultaneous determination of film thickness (d) and temperature (T) immediately upon - however without touching - the surface of a substrate (1) subjected to a coating, such as a wafer, in which the instantaneous measurement signals from a pyrometer (B; 7, 11, 12) and a reflectometer (A; 5, 8, 10) are evaluated at the same time, whereby

   (a) the thickness of the coating (d) is determined by a comparison of the measured reflectivity (R) with a predetermined coating thickness dependency (R=f(d));

   (b) the temperature (T) is determined by an evaluation formula not depending on the emissivity ($\varepsilon$) parameter and not on the layer thickness (d) parameter but in real time on the measurement signals (P, L) from the reflectometer (A; 5, 8, 10) and the pyrometer (B; 7, 11, 12).

2. A process for the determination of the layer thickness (d) and the substrate temperature (T) during the coating of substrates (1) in facilities for the production of semiconductors or in coating installations using the detected temperature radiation from the coated substrate (1) in accordance with Claim 1, **characterised in that**

   - the emissivity ($\varepsilon$) from a reflectometer is determined in accordance with the equation $\varepsilon = 1 - R$;

   - the temperature (T) is determined according to the evaluation formula

$$T = \frac{c_2}{\lambda} \left\{ \ln \left[ 1 + \cfrac{1}{\cfrac{\lambda^5 \; f_{planck}(\lambda, T_0)}{c_1} \quad \cfrac{P}{P_0} \quad \cfrac{1-R_0}{1-R_0 \; \frac{L}{L_0}}} \right] \right\}^{-1}$$

   whereby the starting temperature ($T_0$) is obtained by pyrometry; and the layer thickness (d) is determined from an equation using the measured reflectivity with a pre-determined - for increasing layer thickness (d) - oscillating layer thickness dependency (R = f(d)).

3. A process according to Claim 1 or Claim 2, characterised in that

   - the thermal radiation of the substrate (1) and the reflected radiation of a light source (6) is measured in each case by a detector (7, 8), by means of a phase sensitive modulation technique associated with each detector - including in each case a chopper (9, 11) and a lock-in amplifier (10, 12) connected to it;

   - which measures, in the one detector arm (A), only the radiation of the light source (6) reflected from the substrate (1), proportional to the reflectivity (R) and in the other detector only the thermal radiation proportional to $\varepsilon \cdot f_{planck}$;

   - that the signals from the detectors (7, 8) are processed either analog or digitally, so as to determine the temperature (T) in real time using the evaluation formula.

4. A process according to Claim 1 or Claim 2, characterised in that the light from a light source (6) is processed into a narrow first frequency band using an optical chopper (9) and the thermal radiation from a second chopper (11) is modulated in a second frequency band.

5. A process according to one of the Claims mentioned, characterised in that the temperature (T) determined from the evaluation formula is applied for process control.

6. A process according to one of the Claims mentioned, in which the reflectivity (R) is brought forward for the deter-

mination of the emissivity ($\varepsilon$).

7. A process according to one of the Claims mentioned, in which the substrate (1) is opaque.

8. **A device** for performing the process according to one of the previous process claims, characterised in that

- a first detector (7) is present in a temperature radiation arm (B) for the measurement of the intensity of the thermal substrate radiation;

- that in the reflectometer arm (A) a second detector (8) is provided for the capture of radiation from a light source (6) reflected from the substrate (1);

- whereby the light source (6) in the reflectometer arm (A) and the thermal radiation from the substrate (1) are monochromatised by the same filter (3) or one of similar construction;

- whereby the detectors (7, 8) are each allocated a chopper (9, 11) as well as a lock-in amplifier (10, 12).

9. A device according to Claim 8, characterised in that the angle of incidence of the reflectometer light and the angle of observation of the temperature arm with the pyrometer are the same.

10. A device in accordance with one of the previous device Claims, characterised in that the light source (6) is a monochromatic light source - preferably a laser, a visible light source in the form of globar rods (SIC), a black body radiator or a halogen lamp.

11. A device in accordance with one of the previous device Claims, characterised in that when the incidence of radiation onto the substrate (1) is not normal the two detector arms (A; B) are spatially separated in their construction from the light source (6).


**Revendications**

1. Procédé de détermination en temps réel et simultanée de l'épaisseur de couche (d) d'un film et de la température (T) directement sur la surface - et toutefois sans contact - d'un substrat (1), tel qu'une plaquette, soumis à une enduction, dans lequel, en même temps les signaux de mesure temporels d'un pyromètre (B ; 7, 11, 12) et d'un réflectomètre (A ; 5, 8, 10) sont évalués où

(a) l'épaisseur de couche (d) est déterminée à partir de la réflectivité mesurée (R) en fonction d'une dépendance prédéfinie (R = f(d) entre la réflectivité mesurée (R) et l'épaisseur de couche ;
(b) la température (T) est estimée en temps réel par une formule indépendante des paramètres émissité ($\varepsilon$) et épaisseur de couche (d), mais fonction des signaux de mesure (P, L) du réflectomètre (A ; 5, 8, 10) et du pyromètre (B ; 7, 11, 12).

2. Procédé de détermination de l'épaisseur de couche (d) et de la température (T) du substrat pendant l'enduction de substrats (1) au sein de dispositifs pour la préparation de semi-conducteurs ou dans des installations d'enduction avec utilisation d'un rayonnement thermique détecté, émis par le substrat (1) enduit, selon la revendication (1), caractérisé en ce que

- l'émissivité ($\varepsilon$) est déterminée par un réflectomètre d'après l'équation $\varepsilon = 1 - R$
- la température (T) est déterminée d'après la formule

$$T = \frac{c_2}{\lambda}\left(\ln\left[1 + \cfrac{1}{\cfrac{\lambda^5}{c_1}f_{planck}(\lambda, T_0)\,\cfrac{P}{P_0}\,\cfrac{1-R_0}{1-R_0\frac{L}{L_0}}}\right]\right)^{-1}$$

où la température initiale ($T_0$) est déterminée par pyrométrie ; et

- la détermination de l'épaisseur de couche (d) est réalisée par une relation de dépendance prédéfinie (R = f (d)) entre la réflectivité mesurée et l'épaisseur de couche qui est oscillante - en cas d'augmentation de l'épaisseur de couche (d).

3. Procédé selon la revendication 1 ou 2, caractérisé en ce que le rayonnement thermique du substrat (1) et le rayonnement réfléchi d'une source lumineuse (6) sont mesurés respectivement par un détecteur (7, 8) au moyen d'une technique de modulation sensible à la phase appartenant à chaque détecteur, contenant respectivement un hacheur (9, 11) ainsi qu'un amplificateur synchronisé (10 ; 12) qui lui est relié ;

- en ce que sont mesurés dans une branche détecteur (A) uniquement le rayonnement de la source de lumière (6) réfléchi par le substrat (1) proportionnellement à la réflectivité (R) et dans l'autre détecteur (B) uniquement le rayonnement thermique proportionnellement à ε. f planck ;
- en ce que les signaux des détecteurs (7, 8) sont traités de manière analogique ou numérique pour déterminer en temps réel la température (T) avec la formule.

4. Procédé selon l'une des revendications 1 et 2, caractérisé en ce que la lumière d'une source lumineuse (6) est préparée au moyen d'un hacheur optique (9) dans un premier domaine étroit de fréquences et le rayonnement thermique est modulé par un deuxième hacheur (11) dans un second domaine de fréquences.

5. Procédé selon l'une des revendications précédentes, caractérisé en ce que la température (T) déterminée d'après la formule est utilisée pour le réglage du procédé.

6. Procédé selon l'une des revendications précédentes, dans lequel la réflectivité (R) est utilisée pour déterminer l'émissivité (ε).

7. Procédé selon l'une des revendications précédentes, dans lequel le substrat (1) est opaque.

8. Dispositif de mise en oeuvre du procédé selon l'une des revendications précédentes, caractérisé en ce

- qu'un premier détecteur (7) est prévu pour la mesure de l'intensité du rayonnement thermique du substrat dans une branche du rayonnement thermique (B) ;
- que dans la branche réflectomètre (A) un deuxième détecteur (B) est prévu pour la détermination du rayonnement envoyé par une source de lumière (6) et réfléchi par le substrat (1) ;
- que la source de lumière (6) de la branche réflectomètre (A) et le rayonnement thermique du substrat (1) sont monochromatisés par le même filtre ou des filtres semblables (3) ;
- qu'un hacheur (9, 11) ainsi qu'un amplificateur synchrone (10, 12) sont associés respectivement aux détecteurs (7, 8).

9. Dispositif selon la revendication 8, caractérisé en ce que l'angle d'incidence de la lumière du réflectomètre et l'angle d'observation de la branche rayonnement thermique avec pyromètre sont égaux.

10. Dispositif selon l'une des revendications de dispositif précédentes, caractérisé en ce que la source de lumière (6) est une source de lumière monochromatique, de préférence un laser, une source de lumière blanche sous forme de barres GLOBAR (SIC), un radiateur corps noir ou une lampe halogène.

11. Dispositif selon l'une des revendications de dispositif précédentes, caractérisé en ce que les deux branches détecteur (A ; B) sont placées dans un espace séparé de la source de lumière (6) lors d'une incidence non verticale du rayonnement sur le substrat (1).

FIG. 1